(19) **Europäisches Patentamt**

**European Patent Office**

**Office européen des brevets**

(11) Publication number : **0 415 721 B1**

(12) # EUROPEAN PATENT SPECIFICATION

(45) Date of publication of patent specification :
02.08.95 Bulletin 95/31

(51) Int. Cl.⁶ : **G11B 11/10**

(21) Application number : **90309411.8**

(22) Date of filing : **29.08.90**

(54) **Modulated magnetic field generator.**

(30) Priority : **31.08.89 JP 222968/89**
**31.08.89 JP 222969/89**
**25.06.90 JP 164239/90**

(43) Date of publication of application :
**06.03.91 Bulletin 91/10**

(45) Publication of the grant of the patent :
**02.08.95 Bulletin 95/31**

(84) Designated Contracting States :
**DE FR GB IT NL**

(56) References cited :
**EP-A- 0 110 513**
**EP-A- 0 251 561**
**DE-A- 3 510 620**
**US-A- 4 700 250**
**US-A- 4 750 159**
**PATENT ABSTRACTS OF JAPAN vol. 13, no.**
**583 (P-981)(3931) 22 December 1989, &**
**JP-A-1245450 (NTT) 29 September 1989,**

(73) Proprietor : **CANON KABUSHIKI KAISHA**
**30-2, 3-chome, Shimomaruko,**
**Ohta-ku**
**Tokyo (JP)**

(72) Inventor : **Hasegawa, Koyo, c/o Canon**
**Kabushiki Kaisha**
**30-2, 3-chome,**
**Shimomaruko**
**Ohta-Ku, Tokyo (JP)**

(74) Representative : **Beresford, Keith Denis Lewis**
**et al**
**BERESFORD & Co.**
**2-5 Warwick Court**
**High Holborn**
**London WC1R 5DJ (GB)**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 415 721 B1

## Description

## BACKGROUND OF THE INVENTION

### Field of the Invention

The present invention relates to a modulated magnetic field generator used in a magnetic field modulation type magneto-optical recording apparatus.

### Related Background Art

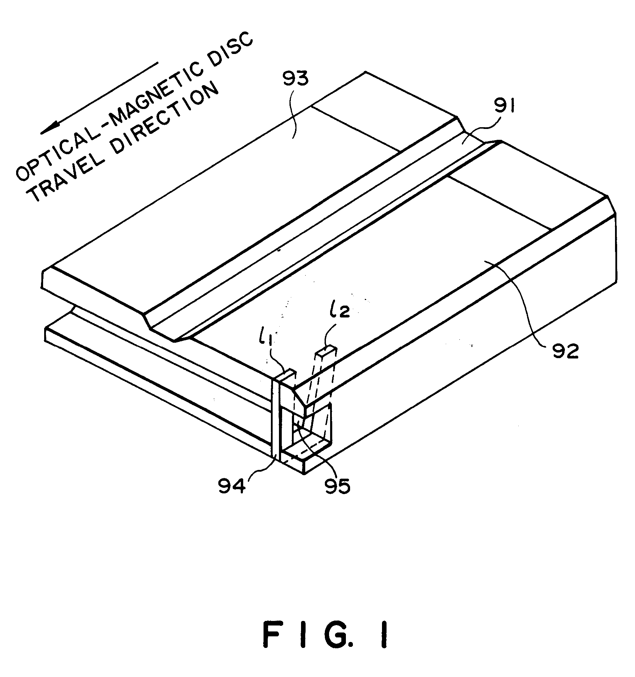

A floating type magnetic head as shown in Fig. 1 has been known as a magnetic head to be used in the modulated magnetic field generator. In Fig. 1, a slider 91 for creating a floating force is made of a non-magnetic material and it has sliding surfaces 92 and 93 on both sides. A core 94 for generating a vertical magnetic field is embedded in an air flow section (that is, a section which receives an air flow directed to a travel direction (track direction of a magneto-optical disk which is a magneto-optical recording medium) of one of the sliding surfaces. A winding window 95 is formed by cutting a rear end of the slider 91 and a coil is wound on the core 94 through the winding window 95. As a result, a magnetic path is opened at the end of the core 94 and magnetic poles $\ell_1$ and $\ell_2$ are arranged on the surface of the slider 91 which faces the magneto-optical disk. As is known, a vertical magnetic field is applied to a magneto-optical recording layer in the magneto-optical disk by a signal voltage to the coil.

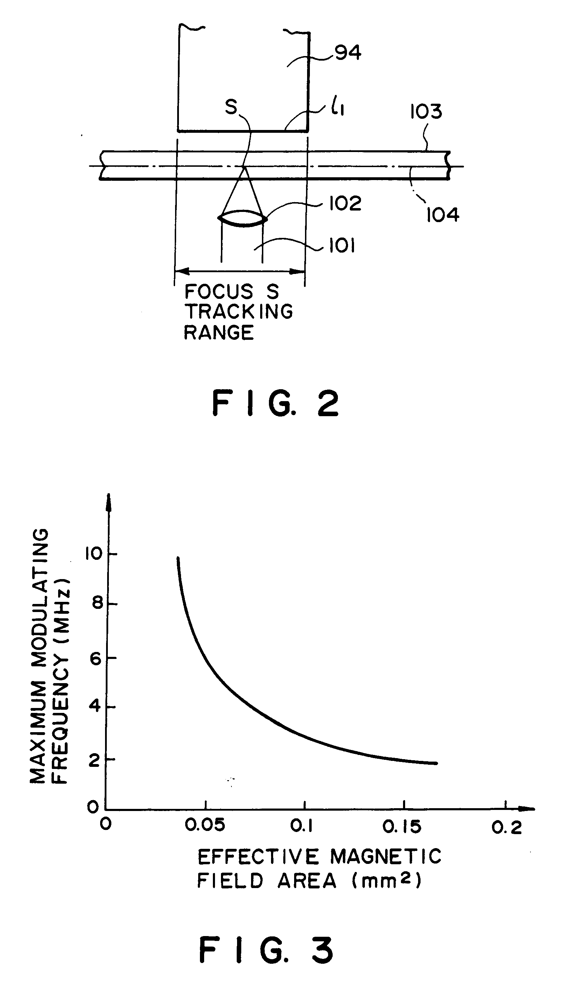

On the other hand, as shown in Fig. 2, a light beam 101 from a semiconductor laser (not shown) is focused by an objective lens 102 to a focus point S on the magneto-optical recording layer in the magneto-optical disk 103 which is the magneto-optical recording medium. The core 94 is positioned on the opposite side of the magneto-optical disk 103, and the vertical magnetic field is applied to the magneto-optical recording layer 104 from the magnetic pole $\ell_1$. Normally, the focus point S is moved radially of the magneto-optical disk 103 (tracking) within a range of approximately ±250 μm without the movement of the optical head, and the magnetic pole $\ell_1$ of the core 94 is designed such that a width of an effective vertical magnetic field covers the range of movement of the focus point.

Further, the core 94 is of U-shape to open the magnetic path for efficient generation of the magnetic field. As shown in Fig. 1, the magnetic pole $\ell_2$ which generates a magnetic field of the opposite polarity to that of the magnetic pole $\ell_1$ is also arranged on the sliding surface 92, and a spacing between the magnetic poles $\ell_1$ and $\ell_2$ is relatively wide, that is, several hundreds μm to assure a sufficient area for the winding window 95

However, when a positioning error for the core 94 and the objective lens 102 is combined, an axis of the core 94 in a radial direction (transverse to the track) of the magneto-optical disk is approximately ±300 μm and a trackwise length is at least ±100 μm. On the other hand, a relation between the area (mm²) of the effective vertical magnetic field generated by the core and a maximum modulation frequency of the magnetic head is inversely proportional as shown in Fig. 3. Namely, the area of the effective magnetic field of the magnetic field corresponds to a sectional area of the magnetic pole of the core, and the sectional area of the magnetic pole $\ell_1$ is substantially equal to 0.6 mm x 0.2 mm = 0.12 mm² and the maximum modulation frequency is approximately 2.5 MHz.

On the other hand, a demand for a characteristic of the magneto-optical recording apparatus has been being directed toward high speed year by year and a higher maximum modulation frequency is desired. The frequency of 2.5 MHz is not sufficiently high. Further, because the spacing between the two magnetic poles $\ell_1$ and $\ell_2$ is as wide as 100 μm, a magnetic reluctance which forms the magnetic path between the two magnetic poles is high and it is not possible to efficiently and sufficiently generate the vertical magnetic field.

EP-A-0110513 discloses a magnetic transducer including an integrated core structure carrying two magnetic field generating coils so as to defined a first relatively low reluctance magnetic circuit having a recording gap, and a second relatively high reluctance magnetic circuit having a gap which acts as a read gap. The transducer is arranged for reading an/or writing signals on a magnetic recording medium.

US-A-4700250 discloses a floating system magnetic head having a magnetic core in which a gap is formed with a coil wound on the core. The magnetic core is fixed to a slider which floats above a magnetic disc.

US-A-4750159 discloses a magnetic field generator for applying a magnetic field to a magneto-optical recording medium. The magnetic field generator has first and second electro magnetic coils separated from each other. The first coil is energized to generate a first magnetic field having a first predetermined intensity, whilst the second coil is energized to generate a second magnetic field having a second predetermined intensity.

DE-A-3510620 describes an arrangement for applying a magnetic field to a magneto-optical recording medium including a number of small magnetic field coils.

## SUMMARY OF THE INVENTION

It is an object of the present invention to provide a modulated magnetic field generator which efficiently assures a sufficient range of effective vertical magnetic field and also permits setting of a higher maximum modulation frequency.

To achieve the above object, in accordance with a first aspect of the present invention there is provided a magnetic field generator for applying to a magnetooptical recording medium in the presence of a light beam, a magnetic field modulated in accordance with information signals to be recorded on the recording medium, said field generator comprising: a plurality of magnetic field generating cores; a plurality of magnetic field generating coils wound on said magnetic field generating cores for generating a magnetic field; and drive means comprising a signal source for driving said magnetic field generating coils so as to apply the magnetic field to the recording medium; said magnetic field generator being characterised by: an air floating slider, said plurality of magnetic field generating coils being formed on said slider; said signal source being arranged to drive said magnetic field generating coils so as to invert the polarities of the magnetic fields generated by said magnetic field generating coils in accordance with the information signals, said drive means selectively driving said magnetic field generating coils dependent on the positions at which the light beam irradiates the recording medium.

As a result, the range of effective vertical magnetic field covered by one magnetic field generating core section is reduced. Thus, the sectional area of the magnetic pole can be reduced and the corresponding maximum modulation frequency can be set higher. Since the range of tracking control of the objective lens is covered by using a plurality of such magnetic field generating core sections, a desired and sufficient range of effective vertical magnetic field is assured.

BRIEF DESCRIPTION OF THE DRAWINGS

Fig. 1 shows a perspective view of a prior art modulated magnetic field generator,

Fig. 2 illustrates movement of a light beam in the prior art,

Fig. 3 shows a graph of a relation between a modulation frequency and an effective magnetic field,

Fig. 4 shows a perspective view of one embodiment of a modulated magnetic field generator of the present invention,

Fig. 5 shows a diagram of magneto-optical recording which uses the modulated magnetic field generator of the present invention,

Figs. 6A and 6B show front view and side view of a core array in other embodiment of the modulated magnetic field generator,

Fig. 7 shows a perspective view of a magnetic head which uses the core array shown in Figs. 6A and 6B,

Fig. 8 shows a distribution of a generated magnetic field in divided cores,

Figs. 9A and 9B show front view and side view of a core array in other embodiment of the modulated magnetic field generator;

Figs. 10A and 10B show front view and side view of a core array in other embodiment of the modulated magnetic field generator,

Fig. 11 shows a perspective view of a magnetic head which uses the core array shown in Figs. 10A and 10B,

Figs. 12A and 12B show front view and side view of a core array in other embodiment of the modulated magnetic field generator,

Figs. 13A and 13B show diagram and graph of a positional relation between an energized core and an adjacent non-energized core, and a strength of magnetic field at a point P,

Figs. 14A and 14B show diagram and graph of a relation of strengths of magnetic field between the energized core and the adjacent non-energized core,

Fig. 15 shows a perspective view of a magnetic head in other embodiment of the modulated magnetic field generator,

Fig. 16 shows a diagram of a magnetic record status by the magnetic head of Fig. 15, and

Fig. 17 shows a front view of a 4-divided core, with a magnetic field distribution.

DESCRIPTION OF THE PREFERRED EMBODIMENTS

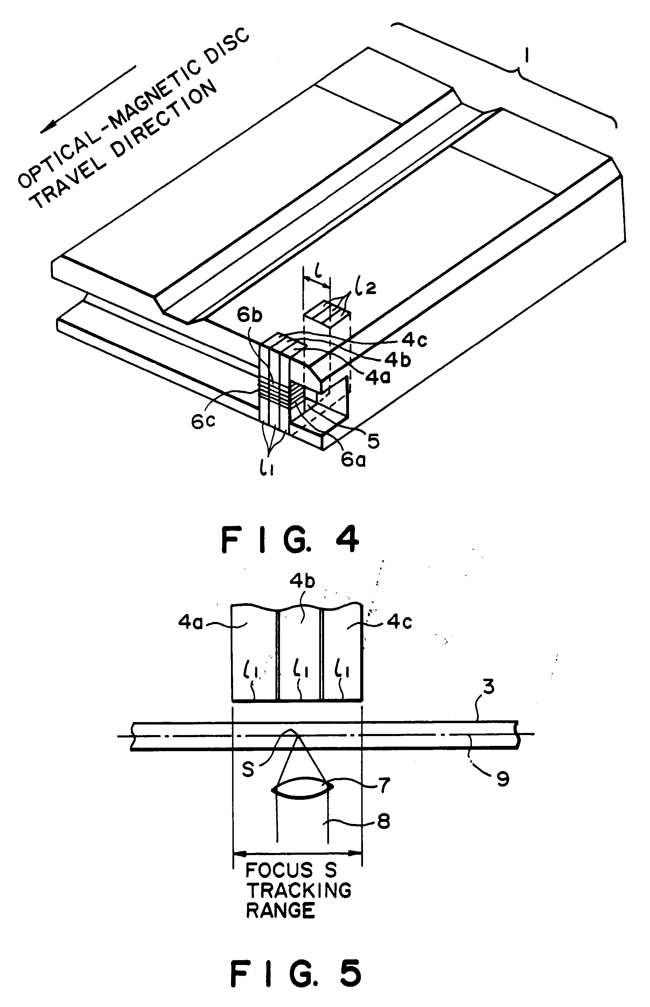

One embodiment of the modulated magnetic field generator of the present invention is now explained in detail with reference to Figs. 4 to 7. A magnetic head of the modulated magnetic field generator shown in Fig. 4 has cores 4a, 4b and 4c of the same shape formed by dividing a slider mode of a non-magnetic material into three sections. The cores 4a to 4c are arranged closely to each other along the radial direction (transverse to the track direction) of a magneto-optical disk 3 which is a magneto-optical recording media. The radial direction of the magneto-optical disk 3 means a direction along which an objective lens in an optical head mounted on the opposite side of the disk to the that of the magnetic head is tracking-controlled.

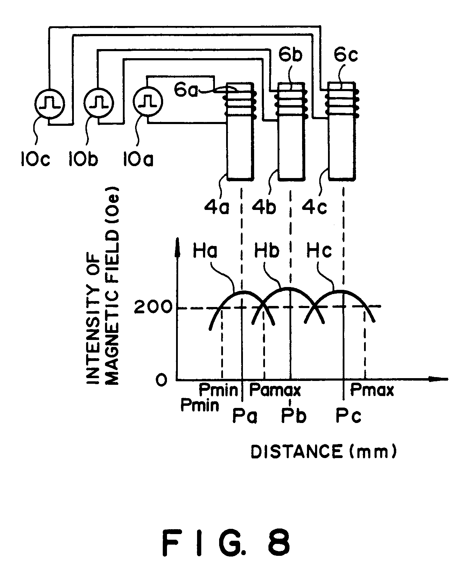

Each of the cores 4a to 4c has magnetic poles $\ell_1$ and $\ell_2$ for opening the magnetic path formed at the end of core, with a spacing $t_2$ therebetween. Coils 6a to 6c are wound on the magnetic poles $\ell_1$ through a winding window 5. The coils 6a to 6c are modulated and energized by drive means (not shown). As is known, an objective lens 7 which is one component of the optical head is mounted on the opposite side of the magneto-optical disk 3 and is movable radially of the disk within the area of the effective vertical magnetic field of the cores 4a to 4c for the magnetic poles $\ell_1$, a light beam 8 emitted from a semiconductor laser (not shown) is focused by the objective lens 7 onto a focus point S on the magneto-optical recording layer 9 in the magneto-optical disk 3. As shown in Fig. 8, in the relation between the magnitude of the magnetic field in the magneto-optical recording layer 9 and the direction of movement of the focus point S when the cores 4a to 4c are energized separately, the core 4a exhibits a distribution Ha of the generated magnetic field with a range of effective magnetic field of Pa min to Pa max, and the cores 4b and 4c exhibit Hb and Hc of substantially same range. Assuming that the strength of the generated magnetic field necessary for recording is 15.91 x $10^3$ Am$^{-1}$ (200 Oe), required and sufficient effective vertical magnetic field can be secured for all cores 4a to 4c. Further, the overall range can cover the range of movement of the focus point S due to the movement of the objective lens in the tracking control mode.

In the present embodiment, the coils 6a to 6c on the cores 4a to 4c are selectively energized in accordance with the movement of the focus point S. Alternatively, the three coils 6a to 6c may be simultaneously energized. In this case, triple power is required but the control to select the energization of the coils 6a to 6c in accordance with the movement of the focus point S is not necessary.

In whatever manner the coils 6a to 6c are energized, a characteristic of the magnetic head as viewed from the drive source is that the area of effective vertical magnetic field for each of the cores 4a to 4c along the direction of movement of the focus point S is 1/3 even if the spacing between the magnetic poles $\ell_1$ and $\ell_2$ along the direction (track direction) transverse to the direction of movement of the focus point S is same as that in the prior art. Namely, if it is 0.2 mm x 0.2 mm = 0.04 mm$^2$, a maximum modulation frequency of 7.5 MHz may be used, as seen from Fig. 3.

The larger the number of divisions of the core, the higher is the maximum modulation frequency that may be used. On the other hand, more signal sources 10a ... for energization are required, a higher accuracy for the detection of the position of the focus point S and a switching control unit should be provided, and a severer condition is required. Accordingly, the number of divisions is preferably 3 or 4 at most.

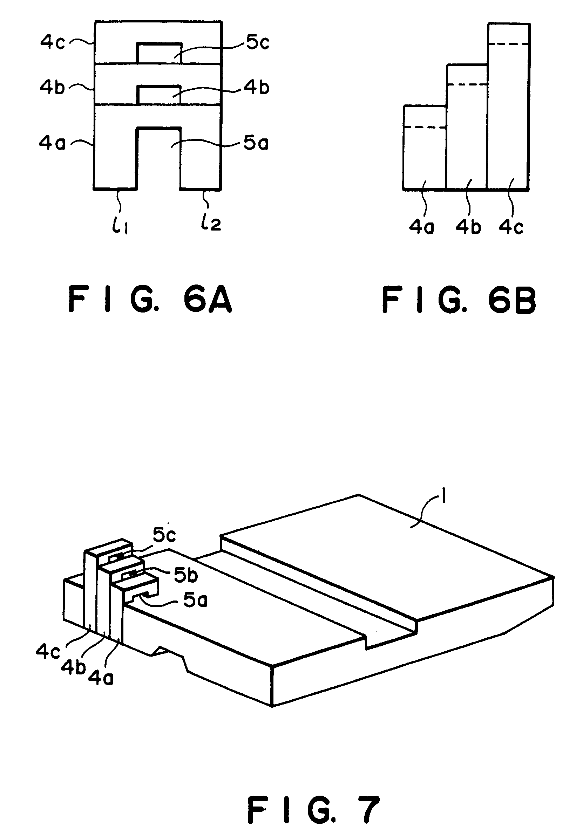

Another embodiment of the present invention is now explained with reference to Figs. 6A, 6B and 7. A feature thereof resides in a manner of separately winding coils 6a to 6c on the divided cores 4a to 4c. The cores 4a to 4c are arranged in an ascending order of height and the winding windows 5a, 5b and 5c are arranged in a staggered fashion so that the winding work is facilitated.

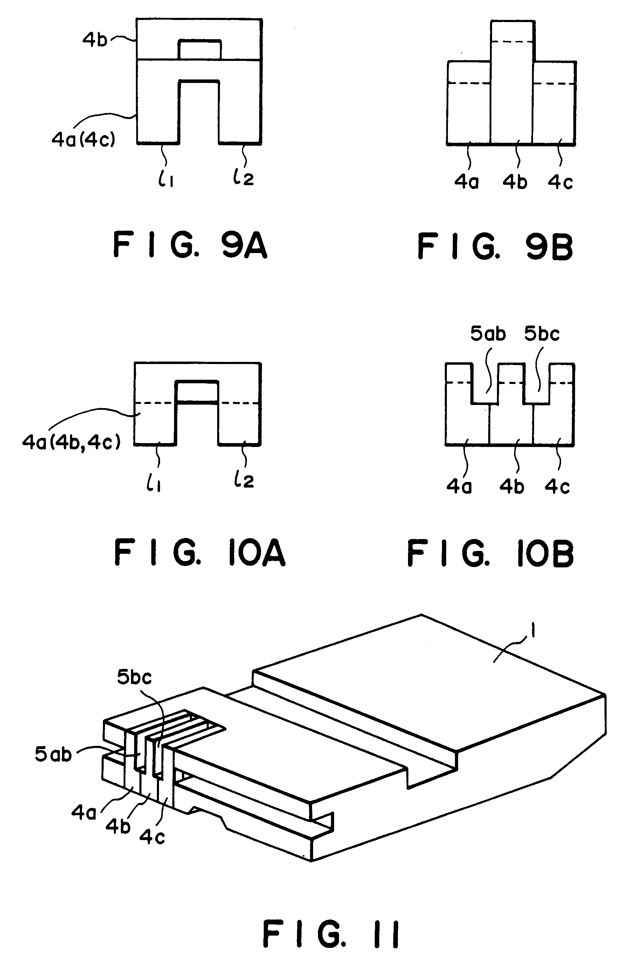

Other embodiment of the present invention is shown in Figs. 9A and 9B. In the present embodiment, the cores 4a and 4c are low and only the core 4b is high. The winding windows 5a', 5b' and 5c' separately expose.

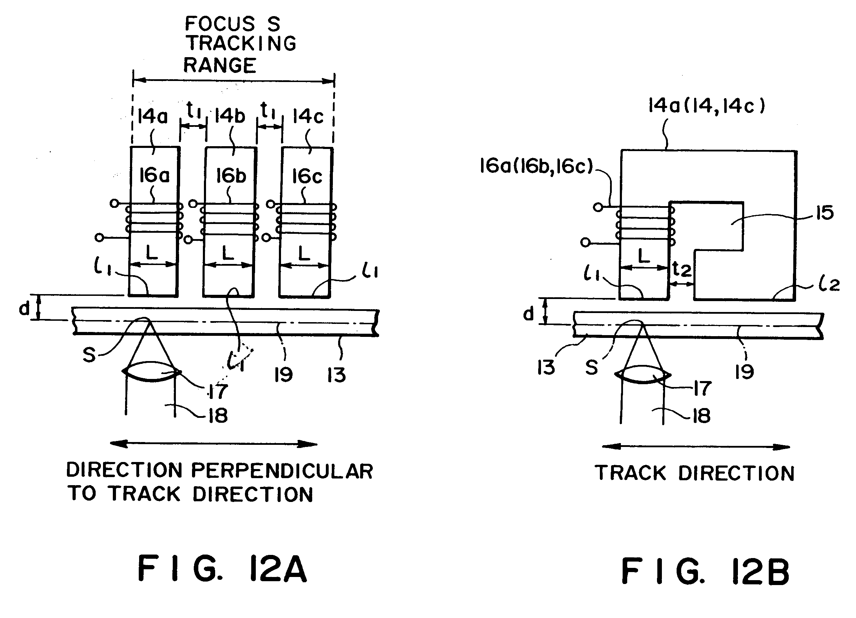

In an embodiment shown in Figs. 10A, 10B and 11, the cores 4a, 4b and 4c have notches at the opposite ends to the core ends which forms the magnetic poles $\ell_1$ and $\ell_2$ and the windings 5ab and 5bc are formed between the notches.

As explained above, the modulated magnetic field generator of the present invention comprises a floating magnetic head having the magnetic field generating core arranged in the slider mode of non-magnetic material, and the magnetic field of the polarity corresponding to the recording information is applied to the magneto-optical recording medium by the magnetic head. The magnetic field generating core of the magnetic head is divided into a plurality of sections along the direction of movement of the optical head which is movable along the direction perpendicular to the track direction of the magneto-optical recording medium. The modulated magnetic field generating coil is wound on each of the magnetic field generating cores.

In accordance with the present invention, since the magnetic field generating cores is divided into a plurality of sections along the direction perpendicular to the track direction of the magneto-optical recording medium, a high maximum modulation frequency may be set for each core and the entire core may assure the area of magnetic field which sufficiently covers the range of movement of the focus point S. Thus, a magneto-optical recording apparatus having a high transfer rate is provided and a power consumption is reduced.

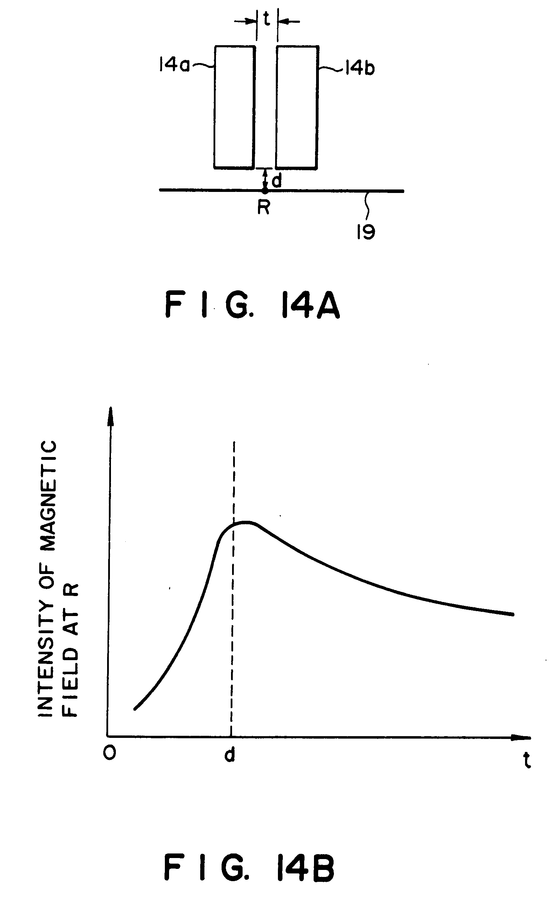

Other embodiment of the modulated magnetic field generator of the present invention is now explained with reference to Figs. 12A, 12B to 14A, 14B. A magnetic head of the modulated magnetic field generator shown in Figs. 12A and 12B has three cores 14a, 14b and 14c of the same shape on a slider (not shown) made of a non-magnetic material. The cores 14a to 14c are arranged radially of the magneto-optical disk 13 which is a magneto-optical recording media (a direction transverse to the track direction) with a spacing of $t_1$ from each other. The cores 14a to 14c form magnetic poles $\ell_1$ and $\ell_2$ for opening magnetic paths at the ends of cores, with a spacing of $t_2$ between the magnetic poles $\ell_1$ and $\ell_2$. Namely, the magnetic poles $\ell_1$ and $\ell_2$ are spaced by $t_2$ trackwise. Coils 16a to 16c are wound on the magnetic poles $\ell_1$ through a winding window 15. The coils 16a to 16c are modulated and energized by drive means (not shown). As is known, an objective lens 17 which is one component of the optical head is arranged on the opposite side of the magneto-optical disk and is movable radially of the disk within the area of the effective vertical magnetic field of the cores 14a to 14c, for the magnetic poles $\ell_1$. A light beam 18 emitted from a semiconductor laser (not shown) is focused by the objective lens 17 onto a focus point S on the magento-optical recording layer 19 in the magneto-optical disk 13. A distance between the magnetic pole $\ell_1$ and the magneto-optical recording layer is given by d. The cores 14a to 14c are embedded in the slider as they are in the prior art and the magnetic poles $\ell_1$ and $\ell_2$ expose to the sliding surface.

The distance d between the surface of the magnetic pole $\ell_1$ which faces the disk and the magneto-optical recording layer 19, and the spacing $t_1$ between the cores and the spacing $t_2$ between the two magnetic poles is each core have the following general relationship.

$$d \leqq t_1, \qquad d \leqq t_2 \quad (1)$$

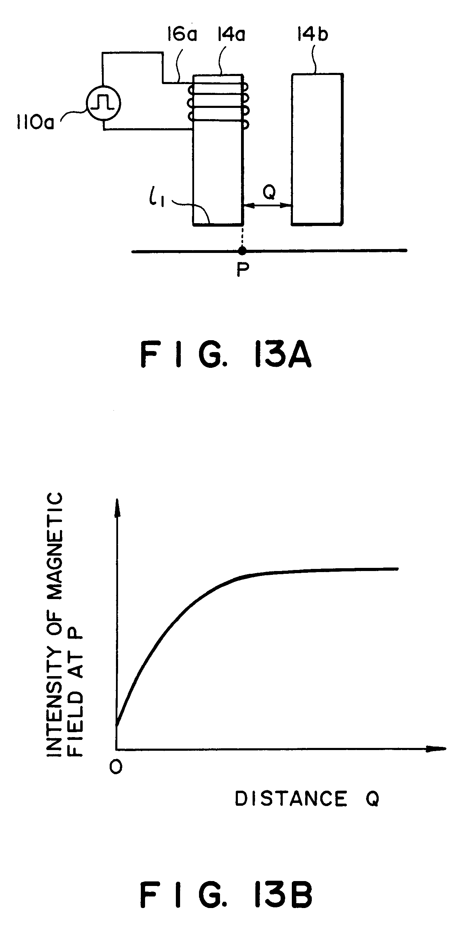

Most efficient d, $t_1$ and $t_2$ are now discussed. When a voltage is applied only to the core which faces the focus point S focused by the objective lens 17, the strength of vertical magnetic field at a point P spaced by a distance equal to the distance to the magneto-optical recording layer 19 increases as the distance Q ($t_1$) increases, as shown in Fig. 13A. This shows that as the core moves closer to the adjacent core, a magnetic reluctance for a magnetic flux directed toward the point P becomes larger than a magnetic reluctance of a magnetic path directed to the opposite side of the core through the adjacent core and hence the magnetic field at the point P is weakened. To explain it from a different viewpoint, as shown in Figs. 14A and 14B, the strength of the magnetic field at an intermediate point R between the adjacent cores has a peak value of approximately $t \simeq d$, and it tends to decrease on the both sides of $t \simeq d$ (where $t = t_1$).

In Fig. 14B, the strength of the magnetic field is peak when $t \simeq d$, but when the size of core changes, the strength of the magnetic field may exhibit the peak when $t > d$. Accordingly, in actual, a relation of $t_1 \geqq d$, $t_2 \geqq d$ may be retained.

A relation between the distance $t_2$ between the two magnetic poles, the spacing between the cores and the width L of the core may be retained as

$$t_1 \leqq L, \qquad t_2 \leqq L$$

when $t_1$ and $t_2$ are larger than L, the vertical magnetic field cannot be efficiently and sufficiently generated.

As explained above, in accordance with the modulated magnetic field generator of the present invention, the floating magnetic head having the magnetic field generating core arranged on the slider made of non-magnetic material is provided, and the magnetic field of the polarity corresponding to the recording information is applied to the magneto-optical recording medium by the magnetic head. The magnetic field generating core of the magnetic head is divided into a plurality of sections along the direction of movement of the optical head which is movable along the direction perpendicular to the track direction of the magneto-optical recording medium. The spacing $t_1$ between the magnetic field generating cores and the spacing $t_2$ between the magnetic field generating core and the opened magnetic path at the end of core are no smaller than the distance d between the end of core and the recording layer of the magneto-optical recording medium and no larger than the width L of the core.

Accordingly, the area of effective vertical magnetic field covered by the magnetic pole of one magnetic field generating core is reduced and the sectional area of the magnetic pole is reduced and the corresponding maximum modulation frequency can be set higher. Further, since a plurality of such magnetic field generating cores are used, the area of effective vertical magnetic field which is large enough to cover the range through which the objective lens is moved by the tracking control is attained. Further, the distance $t_2$ between the two magnetic poles in one core and the spacing $t_1$ between the cores are no smaller than the distance d between the end of core and the recording layer of the magneto-optical recording medium and no larger than the width L of the core. Accordingly, the magnetic field can be generated at a high efficiency and a strong magnetic field can be attained with a low power consumption.

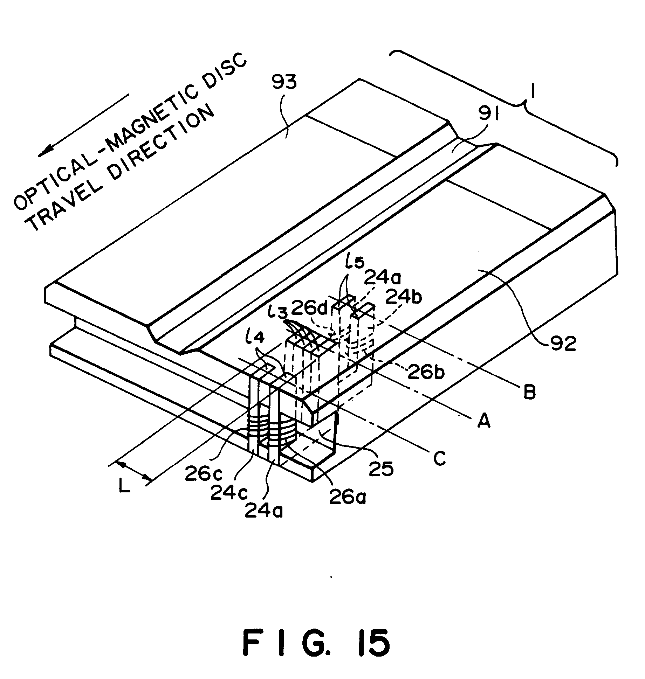

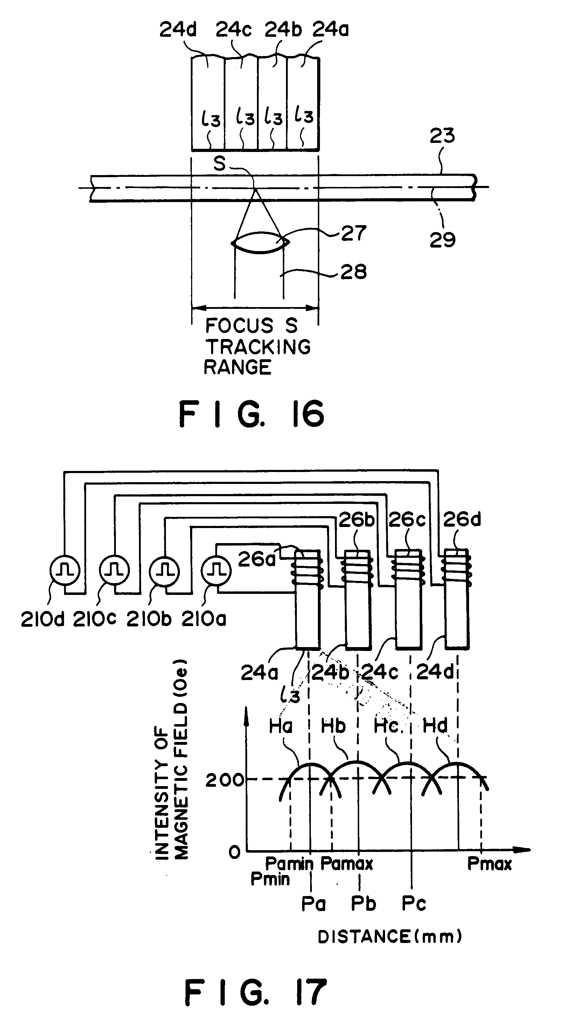

Other embodiment of the modulated magnetic field generator of the present invention is now explained in Fig. 15, the like elements of the magnetic head to those shown in Fig. 1 are not explained here. Numeral 1 denotes a magnetic head slider made of a non-magnetic material, and cores 24a, 24b, 24c and 24d for generating the modulated magnetic field are parallelly arranged thereon. Each of the cores is of U-shape and a winding 26a, 26b, 26c or 26d of a coil is wound on one of vertical core legs and the other core leg (on which no coil is wound) is arranged along the radial direction of the magneto-optical disk 23 (see Fig. 16) which is the magneto-optical recording medium, that is, the direction transverse to the track (line A in Fig. 15). The cores 24a, 24b, 24c and 24d on which the windings are wound are arranged, as first cores, on lines C and B which are parallel to the line A, with a spacing there between equal to the thickness of the core. As a result, in the track direction of the magneto-optical disk, the first cores having windings thereon (cores on the lines B and C in Fig. 15) and the second cores having no windings thereon (cores on the time A in Fig. 15) are alternately arranged. Accordingly, for each of the cores 24a, 24b, 24c and 24d, magnetic poles $\ell_3$, $\ell_4$ and $\ell_5$ are formed to open the magnetic path at the end of core. As shown, the first cores having windings wound thereon are arranged such that the cores 24a and 24c and the cores 24b and 24c are spaced perpendicularly to the track direction, and the second cores having no winding wound thereon are arranged such that the cores 24a, 24b, 24c and 24d are closely contacted to each other perpendicularly to the track direction. The windings 26a to 26d of the coils are modulated and energized by drive means (not shown).

An objective lens 27 which is one component of the optical head is arranged on the opposite side of the magneto-optical disk 23 and is movable radially within the area of effective vertical magnetic field of the cores 24a to 24d, for the magnetic pole $\ell_3$. A light beam 28 emitted from a semiconductor laser (not shown) is focused to a focus point S on the magneto-optical recording layer 29 of the magneto-optical disk 23. As shown in Fig. 17, in a relation between the strength of the magnetic field in the magneto-optical recording layer 29 when the cores 24a to 24d are individually energized and the direction of movement of the focus point S due to the movement of the objective lens, the distribution of the generated magnetic field for the core 24a is Ha and the range of effective magnetic field is from Pa min to Pa max. As for the cores 24b, 24c and 24d, Hb, Hc and Hd are substantially in the same range.

Assuming that the necessary strength of the generated magnetic field in the record mode is 200 Oe, the required and sufficient effective vertical magnetic field can be secured for all cores 24a to 24d. By making use of the effective range of the magnetic fields of the four cores, the range of movement of the focus point S can be covered by the overall range. The magnetic field generated by one core, for example, the magnetic field Ha generated by, the core 24a is high in the area of the magnetic pole $\ell_3$ at the end of the core and decreases as it goes away from $\ell_3$. However, if the cores closely contact to each other, the generated magnetic field is not weakened between the cores. In other words, less power is needed to generate a given strength of magnetic field. Further, since the adjacent cores are spaced from each other by the thickness of the core, the non-contact between the magnetic poles $\ell_3$ is prevented in winding the coils.

In the present embodiment, the coils 26a to 26d on the cores 24a to 24d are selectively energized in accordance with the movement of the focus point S. Alternatively, the four coils 26a to 26d may be simultaneously energized. In this case, the power required is four times but the selective control to the energization of the coils 26a to 26d in accordance with the movement of the focus point S is not necessary.

As explained above, in accordance with the modulated magnetic field generator of the present invention, the floating magnetic head having the magnetic field generating core mounted on the slider mode of the non-magnetic material is provided, and the magnetic field of the polarity corresponding to the recording information is applied to the magneto-optical recording medium by the magnetic head. The magnetic field generating core comprises a plurality of sections. First cores having coils for generating the magnetic field wound thereon and second cores having no coil wound thereon are arranged on the slider along the track direction of the magneto-optical recording medium. The first cores are spaced from each other along the direction perpendicular to the track direction of the magneto-optical recording medium, and the second cores are arranged to closely contact to each other.

In accordance with the modulated magnetic field generator of the present invention, the cores having the windings wound thereon are spaced from each other and the cores having no winding wound thereon are closely contacted to each other. Accordingly, there is no decrease of the generated magnetic field at the boundary of the cores and a high maximum modulation frequency can be set, and the magnetic field of a sufficient wide range can be generated. Further, since a sufficient winding window is secured by the core arrangement described above, the diameter of the coil may be large so that a copper loss is reduced and a power consumption is reduced.

By reducing the area of effective vertical magnetic field covered by the magnetic pole of each magnetic field generating core, the sectional area of the magnetic pole is reduced and the corresponding maximum modulation frequency can be set higher. Further, since a plurality of magnetic field generating cores are arranged on the slider in the predetermined arrangement, the area of effective vertical magnetic field having a uniform magnetic field strength, which is large enough to cover the range through which the objective lens is driven by the tracking control is attained.

## Claims

1. A magnetic field generator for applying to a magnetooptical recording medium (9, 19 or 29) in the presence of a light beam (8 or 18 or 28), a magnetic field modulated in accordance with information signals to be recorded on the recording medium (9 or 19 or 29), said field generator comprising:

   a plurality of magnetic field generating cores (4a, b,c or 14a,b,c or 24a,b,c,d);
   a plurality of magnetic field generating coils (6a, b, c or 16a, b, c or 26a, b, c, d) wound on said magnetic field generating cores (4a, b, c or 14a, b, c or 24a, b, c, d) for generating a magnetic field; and
   drive means comprising a signal source (10a, b, c or 110a, b, b or 210a, b, c,d) for driving said magnetic field generating coils (6a,b,c, 16a,b,c, 26a,b,c,d) so as to apply the magnetic field to the recording medium;
   said magnetic field generator being characterised by:
   an air floating slider, said plurality of magnetic field generating coils (4a,b,c or 14a,b,c or 24a, b, c) being formed on said slider;

said signal source (10a, b,c or 110a,b,c or 210a,b,c,d) being arranged to drive said magnetic field generating coils so as to invert the polarities of the magnetic fields generated by said magnetic field generating coils (6a,b,c or 16a,b,c or 26a,b,c,d) in accordance with the information signals, said drive means selectively driving said magnetic field generating coils (6a,b,c or 16a, b,c,d or 26a,b,c,d) dependent on the positions (S) at which the light beam (8 or 18 or 28) irradiates the recording medium (9 or 19 or 29).

2. A modulated magnetic field generator according to Claim 1 wherein said slider is made of a nonmagnetic material.

3. A modulated magnetic field generator according to Claim 1 wherein said magnetic field generating cores (4a,b,c) are arranged to contact closely each other in a predetermined direction.

4. A modulated magnetic field generator according to Claim 1 wherein said magnetic field generating cores (14a,b,c) are arranged to be spaced from each other in a predetermined direction.

5. A magneto-optical recording apparatus comprising:

an optical head for irradiating a light beam a magneto-optical recording medium at irradiation positions on the recording medium (9, 19 or 29); and

a magnetic field generator for receiving a driving signal and for applying to the recording medium (9, 19 or 29) a magnetic field modulated in accordance with information signals to be recorded on the recording medium, said magnetic field generator comprising:

a plurality of magnetic field generating coils (6a,b,c or 16a,b,c or 26a,b,c,d) wound on magnetic field generating cores (4a,b,c or 14a,b,c or 24a,b,c,d); and

drive means for receiving information signals and for outputting a drive signal to drive said magnetic field generating coils to apply the magnetic field to the recording medium, said drive means comprising a signal source (10a,b,c or 110a,b,c or 210a,b,c,d) for driving said magnetic field generating coils,

said apparatus being characterised in further comprising:

an air floating slider;

said plurality of magnetic field generating cores (4a,b,c or 14a,b,c or 24a,b,c,d) being formed on said air floating slider; and

in that said signal source (10a, b, c or 110a, b, c or 210a, b, c, d) is arranged to produce signals effective to invert the polarities of the magnetic field generated by said magnetic field generating coils (6a,b,c or 16a,b,c or 26a,b,c,d) in accordance with the information signals, and said drive means is arranged to drive selectively said magnetic field generating coils (6a,b,c or 16a,b,c or 26a,b,c,d) to correspond to the irradiation positions (S) of the light beam (8 or 18 or 28) on the recording medium (9,19 or 29).

6. A magneto-optical recording apparatus according to Claim 5 further comprising:

a tracking controller for performing tracking control of said optical head by moving said optical head in a direction perpendicular to a direction of tracks on the recording medium (9, 19 or 29);

wherein said magnetic field generating coils (6a,b,c or 16a,b,c or 26a,b,c,d) are arranged in the direction along which said optical head is tracking-controlled.


**Patentansprüche**

1. Magnetfeldgenerator zum Anlegen eines entsprechend auf einem Aufzeichnungsmedium (9 oder 19 oder 29) aufzuzeichnender Informationssignale modulierten Magnetfelds an das magnetooptische Aufzeichnungsmedium (9 oder 19 oder 29) in Anwesenheit eines Lichtstrahls (8 oder 18 oder 28), wobei der Magnetfeldgenerator umfaßt:

eine Vielzahl magnetfelderzeugender Kerne (4a, b, c oder 14a, b, c oder 24a, b, c, d);

eine Vielzahl magnetfelderzeugender Spulen (6a, b, c oder 16a, b, c oder 26a, b, c, d), die zum Erzeugen eines Magnetfeldes um die magnetfelderzeugenden Kerne (4a, b, c oder 14a, b, c oder 24a, b, c, d) gewickelt sind; und

eine Ansteuereinrichtung, die eine Signalquelle (10a, b, c oder 110a, b, b oder 210a, b, c, d) zum Ansteuern der magnetfelderzeugenden Spulen (6a, b, c oder 16a, b, c oder 26a, b, c, d) umfaßt, um so das Magnetfeld an das Aufzeichnungsmedium anzulegen;

**wobei der Magnetfeldgenerator gekennzeichnet ist durch:**

einen luftschwebenden Gleiter, wobei die Vielzahl magnetfelderzeugender Spulen (4a, b, c oder 14a, b, c, oder 24a, b, c) an diesem Gleiter ausgebildet ist;

die Signalquelle (10a, b, c oder 110a, b, c oder 210a, b, c, d), die angeordnet ist, um die magnetfelderzeugenden Spulen anzusteuern, um so die Polaritäten der von den magnetfelderzeugenden Spulen (6a, b, c oder 16a, b, c oder 26a, b, c, d) erzeugten Magnetfelder entsprechend den Informationssignalen zu invertieren, wobei die Ansteuereinrichtung selektiv die magnetfelderzeugeneden Spulen (6a, b, c oder 16a, b, c oder 26a, b, c, d) ansteuert, abhängig von den Positionen (S), an denen der Lichtstrahl (8 oder 18 oder 28) das Aufzeichnungsmedium (9 oder 19 oder 29) belichtet.

2. Generator zur Erzeugung eines modulierten Magnetfelds nach Anspruch 1,
**dadurch gekennzeichnet, daß**
der Gleiter aus einem nicht-magnetischen Material besteht.

3. Generator zur Erzeugung eines modulierten Magnetfelds nach Anspruch 1,
**dadurch gekennzeichnet, daß**
die magnetfelderzeugenden Kerne (4a, b, c) angeordnet sind, um in einer vorbestimmten Richtung in engem Kontakt miteinander zu sein.

4. Generator zur Erzeugung eines modulierten Magnetfelds nach Anspruch 1,
**dadurch gekennzeichnet, daß**
die magnetfelderzeugenden Kerne (14a, b, c) angeordnet sind, um in einer vorbestimmten Richtung voneinander beabstandet zu sein.

5. Magneto-optisches Aufzeichnungsgerät, mit:
einem optischen Kopf zum Belichten eines magneto-optischen Aufzeichnungsmediums in Belichtungspositionen auf dem Aufzeichnungsmedium (9, 19 oder 29) mit einem Lichtstrahl; und
einem Magnetfeldgenerator zum Empfangen eines Ansteuersignals und zum Anlegen eines entsprechend den auf dem Aufzeichnungsmedium aufzuzeichnenden Informationssignalen modulierten Magnetfelds an das Aufzeichnungsmedium (9, 19 oder 29), wobei der Magnetfeldgenerator umfaßt:
eine Vielzahl magnetfelderzeugender Spulen (6a, b, c oder 16a, b, c oder 26a, b, c, d), die auf magnetfelderzeugende Kerne (4a, b, c oder 14a, b, c oder 24a, b, c) gewickelt sind; und
eine Ansteuereinrichtung zum Empfangen von Informationssignalen und zum Ausgeben eines Ansteuersignals, um die magnetfelderzeugenden Spulen anzusteuern, um das Magnetfeld an das Aufzeichnungsmedium anzulegen, wobei die Ansteuereinrichtung eine Signalquelle (10a, b, c oder 110a, b, c oder 210a, b, c, d) zum Ansteuern der magnetfelderzeugenden Spulen umfaßt;
**wobei das Gerät ferner gekennzeichnet ist durch:**
einen luftschwebenden Gleiter;
wobei die Vielzahl magnetfelderzeugender Kerne (4a, b, c oder 14a, b, c, oder 24a, b, c) an diesem luftschwebenden Gleiter ausgebildet ist; und dadurch, daß

die Signalquelle (10a, b, c oder 110a, b, c oder 210a, b, c, d) angeordnet ist, um Signale zu erzeugen, die wirksam sind, um die Polaritäten der von den magnetfelderzeugenden Spulen (6a, b, c oder 16a, b, c oder 26a, b, c, d) erzeugten Magnetfelder entsprechend den Informationssignalen zu invertieren, und die Ansteuereinrichtung angeordnet ist, um die magnetfelderzeugeneden Spulen (6a, b, c oder 16a, b, c oder 26a, b, c, d) selektiv anzusteuern, entsprechend den Belichtungspositionen (S) des Lichtstrahls (8 oder 18 oder 28) auf dem Aufzeichnungsmedium (9 oder 19 oder 29).

6. Magneto-optisches Aufzeichnungsgerät nach Anspruch 5,
**dadurch gekennzeichnet, daß ferner**
eine Spurführungs-Steuereinrichtung zum Durchführen einer Spurführungs-Steuerung des optischen Kopfes durch Bewegen des optischen Kopfes in einer Richtung, die senkrecht zu einer Spurrichtung auf dem Aufzeichnungsmedium (9, 19 ode 29) ist, vorgesehen ist;
wobei die magnetfelderzeugenden Spulen (6a, b, c oder 16a, b, c oder 26a, b, c, d) in der Richtung angeordnet sind, entlang der der optische Kopf spurführungsgesteuert ist.

# Revendications

1. Générateur de champ magnétique destiné à être appliqué à un support d'enregistrement magnéto-optique (9, 19 ou 29) en présence d'un faisceau lumineux (8, 18 ou 28), le champ magnétique étant modulé en fonction de signaux d'information à enregistrer sur le support d'enregistrement (9, 19 ou 29), ledit générateur de champ comprenant:
une pluralité de noyaux (4a, b, c ou 14a, b, c ou 24a, b, c, d) de génération de champ magnétique;
une pluralité de bobinages (6a, b, c ou 16a, b, c ou 26a, b, c, d) de génération de champ magnétique enroulés sur lesdits noyaux (4a, b, c ou 14a, b, c ou 24a, b, c, d) de génération de champ magnétique pour générer un champ magnétique; et
un moyen de commande comprenant une source de signaux (10a, b, c ou 110a, b, c ou 210a, b, c, d) pour commander les bobinages (6a, b, c, 16a, b, c , 26a, b, c, d) de génération de champ magnétique de manière à appliquer le champ magnétique au support d'enregistrement;
ledit générateur de champ magnétique étant caractérisé par:
un curseur flottant dans l'air, ladite pluralité de bobinages (4a, b, c ou 14a, b, c ou 24a, b, c, d) de génération de champ magnétique étant formés sur ledit curseur;

ladite source de signaux (10a, b, c ou 110a, b, c ou 210a, b, c, d) étant agencée pour commander lesdits bobinages de génération de champ magnétique de manière à inverser les polarités des champs magnétiques générés par lesdits bobinages (6a, b, c ou 16a, b, c ou 26a, b, c, d) de génération de champ magnétique en fonction des signaux d'information, ledit moyen de commande commandant de manière sélective lesdits bobinages (6a, b, c ou 16a, b, c, d ou 26a, b, c, d) de génération de champ magnétique en fonction des positions (S) dans lesquelles le faisceau lumineux (8, 18 ou 28) irradie le support d'enregistrement (9, 19 ou 29).

2. Générateur de champ magnétique modulé selon la revendication 1, dans lequel ledit curseur est réalisé en un matériau non magnétique.

3. Générateur de champ magnétique modulé selon la revendication 1, dans lequel lesdits noyaux (4a, b, c) de génération de champ magnétique sont agencés pour être en contact étroit les uns avec les autres dans une direction prédéterminée.

4. Générateur de champ magnétique modulé selon la revendication 1, dans lequel lesdits noyaux (14a, b, c) de génération de champ magnétique sont agencés pour être espacés les uns des autres dans une direction prédéterminée.

5. Appareil d'enregistrement magnéto-optique comprenant:

une tête optique pour irradier par un faisceau lumineux un support d'enregistrement magnéto-optique dans des positions d'irradiation sur le support d'enregistrement (9, 19 ou 29); et

un générateur de champ magnétique pour recevoir un signal de commande et pour appliquer au support d'enregistrement (9, 19 ou 29) un champ magnétique modulé en fonction des signaux d'information à enregistrer sur le support d'enregistrement, ledit générateur de champ magnétique comprenant:

une pluralité de bobinages (6a, b, c ou 16a, b, c ou 26a, b, c, d) de génération de champ magnétique enroulés sur des noyaux (4a, b, c ou 14a, b, c ou 24a, b, c, d) de génération de champ magnétique; et

un moyen de commande pour recevoir des signaux d'information et pour délivrer un signal de commande pour commander lesdits bobinages de génération de champ magnétique afin d'appliquer le champ magnétique au support d'enregistrement, ledit moyen de commande comprenant une source de signaux (10a, b, c ou 110a, b, c ou 210a, b, c, d) pour commander lesdits bobinages de génération de champ magnétique,

ledit appareil étant caractérisé en ce qu'il comprend en outre:

un curseur flottant dans l'air;

lesdits noyaux (4a, b, c ou 14a, b, c ou 24a, b, c, d) de génération de champ magnétique étant formés sur ledit curseur flottant dans l'air; et

en ce que ladite source de signaux (10a, b, c ou 110a, b, c ou 210a, b, c, d) est agencée pour produire des signaux efficaces pour inverser les polarités du champ magnétique généré par lesdits bobinages (6a, b, c ou 16a, b, c ou 26a, b, c, d) de génération de champ magnétique en fonction des signaux d'information, et ledit moyen de commande est agencé pour commander de manière sélective lesdits bobinages (6a, b, c ou 16a, b, c ou 26a, b, c, d) de génération de champ magnétique pour correspondre aux positions d'irradiation (S) du faisceau lumineux (8 ou 18 ou 28) sur le support d'enregistrement (9, 19 ou 29).

6. Appareil d'enregistrement magnéto-optique selon la revendication 5, comprenant en outre:

un dispositif de commande de suivi de piste pour effectuer une commande de suivi de piste de ladite tête optique en déplaçant ladite tête optique dans une direction perpendiculaire à la direction des pistes sur le support d'enregistrement (9, 19 ou 29);

dans lequel lesdits bobinages (6a, b, c ou 16a, b, c ou 26a, b, c, d) de génération de champ magnétique sont agencés dans la direction le long de laquelle ladite tête optique est commandée en suivi de piste.

F I G. I

...

# F I G. 2

# F I G. 3

OPTICAL-MAGNETIC DISC
TRAVEL DIRECTION

# F I G. 4

# F I G. 5

FOCUS S
TRACKING
RANGE

4c 5c
4b 4b
4a 5a

$l_1$ $l_2$

# F I G. 6A

4a 4b 4c

# F I G. 6B

5c
5b
5a
1
4c
4b 4a

# F I G. 7

# F I G. 8

4b

4a(4c)

$l_1$ $l_2$

## F I G. 9A

4a 4b 4c

## F I G. 9B

4a(4b,4c)

$l_1$ $l_2$

## F I G. IOA

5ab 5bc

4a 4b 4c

## F I G. IOB

5bc

5ab

4a 4b 4c

I

## F I G. II

EP 0 415 721 B1

FOCUS S
TRACKING
RANGE

**F I G. 12A**

DIRECTION PERPENDICULAR
TO TRACK DIRECTION

**F I G. 12B**

TRACK DIRECTION

F I G. 13A

F I G. 13B

F I G. 14A

F I G. 14B

# F I G. 15

EP 0 415 721 B1

24d  24c  24b  24a

$l_3$ | $l_3$ | $l_3$ | $l_3$

S

23

27

28

29

FOCUS S
TRACKING
RANGE

# F I G. 16

26a  26b  26c  26d

210d  210c  210b  210a

24a  24b  24c  24d

$l_3$

INTENSITY OF
MAGNETIC FIELD (Oe)

Ha  Hb  Hc  Hd

200

0

Pamin  Pamax  Pmax
Pmin

Pa  Pb  Pc

DISTANCE (mm)

# F I G. 17

20